# FASCICULE DE BREVET EUROPEEN

(11) **EP 4 120 706 B1**
(45) Date de publication et mention de la délivrance du brevet: **20.11.2024**
(21) Numéro de dépôt: 22184323.8
(22) Date de dépôt: 12.07.2022
(51) Int. Cl.: H04W 4/38, H04W 4/50, H04W 4/70, H04L 69/14, H04L 69/18, H04W 52/00, H04W 76/15, H04W 76/18, H04W 52/02

(54) **PROCÉDÉ DE CONFIGURATION D'UN MODE DE COMMUNICATION D'UN ÉMETTEUR DANS UN RÉSEAU DE COMMUNICATION RADIO**
VERFAHREN ZUM KONFIGURIEREN EINES KOMMUNIKATIONSMODUS EINES SENDERS IN EINEM FUNKKOMMUNIKATIONSNETZ
METHOD FOR CONFIGURING A COMMUNICATION MODE OF A TRANSMITTER IN A RADIO COMMUNICATION NETWORK

(30) Priorité: 15.07.2021 FR 2107666
(43) Date de publication de la demande: 18.01.2023
(73) Titulaire: Delta Dore, 35270 Bonnemain (FR)
(72) Inventeur: BERHAULT, Gilles, 35270 BONNEMAIN (FR); FARQUE, Stéphane, 35230 BONNEMAIN (FR); HENRY, Jean-Christophe, 35230 BONNEMAIN (FR)
(74) Mandataire: Cabinet Le Guen Maillet

(56) Documents cités:
- US-A1- 2008 279 560

## Description

### DOMAINE TECHNIQUE

La présente invention concerne un procédé de configuration d'un émetteur pour communiquer dans un réseau de communication radio. La présente invention concerne aussi un émetteur mettant en oeuvre le procédé de configuration.

### ETAT DE LA TECHNIQUE ANTERIEURE

Un système domotique comporte généralement plusieurs capteurs, ou émetteurs, qui communiquent avec une centrale par le biais d'un protocole radio dans le cadre d'un réseau de communication radio.

Dans certains cas, la centrale est alimentée par pile et il est alors nécessaire de réduire au maximum la consommation énergétique d'une telle centrale pour lui permettre une grande autonomie, typiquement 10 ans, tout en assurant une communication efficace avec les émetteurs. Pour cela, la centrale active une interface radio de manière temporaire, par exemple sur une durée de 2 ms, et effectue ladite activation à intervalles réguliers, par exemple toutes les 250 ms. Dans un tel mode de communication, chaque émetteur doit émettre des trames de données constituées d'un préambule comprenant des informations prédéterminées suivi d'un champ de données. Le préambule a une durée égale au moins à la durée de l'intervalle d'activation de l'interface radio de la centrale. Ainsi, la centrale peut maintenir son interface radio activée dès lors qu'elle détecte un signal, correspondant à un préambule par exemple, ce qui permet à la centrale de recevoir chaque trame de données émise par un émetteur.

Dans d'autres cas, la centrale est alimentée par un réseau de fourniture en énergie électrique d'un bâtiment dans lequel ladite centrale est installée. La consommation énergétique d'une telle centrale n'est alors plus problématique pour son autonomie et il est alors possible d'activer l'interface radio de la centrale en permanence. Il est alors intéressant d'assurer une plus grande autonomie aux émetteurs, généralement alimentés par pile, en appliquant un mode de communication dans lequel les trames de données ne comportent pas de préambule.

Le document US 2008/0279560 A1 décrit un procédé de communication entre un émetteur et un récepteur, de préférence par communication sans fil, permettant de réduire la durée de communication en supprimant une étape de transmission d'une commande de recherche de station.

Cependant, lorsqu'un émetteur est fabriqué ou installé dans un système domotique, il n'est pas toujours possible de connaître à l'avance le type d'alimentation de la centrale du système domotique et donc le mode de communication utilisé.

Il est alors souhaitable de pallier ces inconvénients de l'état de la technique.

Il est notamment souhaitable de fournir une solution qui permette de fabriquer un émetteur adaptable aussi bien à un mode de communication appliqué par une centrale alimentée par pile qu'à un mode de communication appliqué par une centrale alimentée par un réseau de fourniture en énergie électrique.

Il est de plus souhaitable de fournir une solution qui permette à un émetteur de changer de mode de communication par exemple lorsque l'émetteur est utilisé dans un nouveau système domotique différent du système domotique dans lequel l'émetteur était précédemment utilisé.

Il est enfin souhaitable de fournir une solution qui permette une configuration automatique du mode de communication selon le mode de communication de la centrale du système domotique avec laquelle il s'associe.

### EXPOSE DE L'INVENTION

Un objet de la présente invention est de proposer un procédé de communication d'un émetteur dans un réseau de communication radio, le réseau de communication radio comportant une centrale, l'émetteur pouvant appliquer sélectivement un premier mode de communication ou un second mode de communication. Le procédé comporte des étapes de :
- Diffuser une demande d'association dans le réseau de communication selon le premier mode de communication,
- Sélectionner le premier mode de communication lorsqu'un message d'acquittement est reçu en provenance de la centrale en réponse à la demande d'association,
- Sélectionner le second mode de communication si aucun message d'acquittement n'est reçu en réponse à la demande d'association lorsqu'un délai prédéterminé est écoulé depuis la diffusion de ladite demande d'association, et
- Appliquer le mode de communication sélectionné pour communiquer dans le réseau de communication.

Ainsi, un émetteur peut s'adapter automatiquement au mode de communication appliqué par une centrale dans un réseau de communication radio lors de la première association de l'émetteur avec ladite centrale. L'émetteur peut ainsi s'adapter aussi bien au mode de communication d'une centrale alimentée par pile qu'au mode de communication d'une centrale alimentée par un réseau de fourniture en énergie électrique.

Chaque trame de données émise par l'émetteur est constituée d'un préambule d'une durée prédéterminée suivi d'un champ de données lorsque l'émetteur applique le premier mode de communication et chaque trame de données émise par l'émetteur est constituée uniquement d'un champ de données lorsque l'émetteur applique le second mode de communication.

Ainsi, le premier mode de communication permet à une centrale, par exemple alimentée par pile, de réduire sa consommation énergétique tout en assurant la réception de messages envoyés par un émetteur. En outre, le second mode de communication permet d'optimiser la réception de messages envoyés par un émetteur tout en minimisant la consommation énergétique de l'émetteur.

Selon un mode de réalisation particulier, le procédé comporte : enregistrer une information représentative du mode de communication sélectionné, et appliquer le mode de communication identifié par ladite information représentative enregistrée lorsque l'émetteur est remis sous tension après extinction.

Ainsi, la configuration du mode de communication de l'émetteur est effectuée uniquement lors de la première association de l'émetteur à une centrale ou lors de la première mise sous tension de l'émetteur dans le réseau de communication radio. La configuration du mode de communication de l'émetteur n'a pas besoin d'être réitérée tant que l'émetteur reste dans un même système domotique, autrement dit dans le même réseau de communication radio.

Selon un mode de réalisation particulier, le procédé comporte de supprimer le mode de communication enregistré lorsqu'une demande de réinitialisation est reçue.

Ainsi, il est possible de réinitialiser la configuration du mode de communication de l'émetteur de manière volontaire, par exemple pour utiliser l'émetteur dans un nouveau système domotique (ou un réseau de communication radio) différent du système domotique (ou du réseau de communication radio) dans lequel l'émetteur était précédemment utilisé.

L'invention concerne également un émetteur, dans un réseau de communication radio, le réseau de communication radio comportant une centrale, l'émetteur pouvant appliquer sélectivement un premier mode de communication ou un second mode de communication.

L'émetteur comporte : des moyens pour diffuser une demande d'association dans le réseau de communication selon le premier mode de communication ; des moyens pour sélectionner le premier mode de communication lorsqu'un message d'acquittement est reçu en provenance de la centrale ; des moyens pour sélectionner le second mode de communication si aucun message d'acquittement n'est reçu lorsqu'un délai prédéterminé est écoulé depuis la diffusion de ladite demande d'association ; et des moyens pour appliquer le mode de communication sélectionné pour communiquer dans le réseau de communication.

L'invention concerne également un système comportant l'émetteur selon l'un quelconque des modes de réalisation et comportant en outre la centrale du réseau de communication radio.

Selon un mode de réalisation particulier, la centrale émet un message d'acquittement à destination de l'émetteur lorsque la centrale reçoit une trame de données dudit émetteur et si la centrale applique le premier mode de communication, et la centrale n'émet aucun message d'acquittement si la centrale applique le second mode de communication. L'invention concerne également un programme d'ordinateur, qui peut être stocké sur un support et/ou téléchargé d'un réseau de communication, afin d'être lu par un processeur d'un émetteur. Ce programme d'ordinateur comprend des instructions pour implémenter le procédé mentionné ci-dessus dans l'un quelconque de leurs modes de réalisation, lorsque ledit programme est exécuté par le processeur de l'émetteur.

L'invention concerne également un support de stockage d'informations stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau de communication radio comportant un émetteur et une centrale ;
[Fig. 2] illustre schématiquement un exemple d'architecture de la centrale alimentée en énergie électrique par un réseau de fourniture en énergie électrique ;
[Fig. 3] illustre schématiquement un exemple d'architecture de la centrale alimentée en énergie électrique par une pile ;
[Fig. 4] illustre schématiquement un exemple d'architecture de l'émetteur dans lequel la présente invention est implémentée ;
[Fig. 5] illustre schématiquement un exemple de chronogramme de signaux échangés dans le réseau de communication radio lorsque l'émetteur applique un premier mode de communication et que la centrale applique le premier mode de communication ;
[Fig. 6] illustre schématiquement un exemple de chronogramme de signaux échangés dans le réseau de communication radio lorsque l'émetteur applique un second mode de communication et que la centrale applique le second mode de communication ;
[Fig. 7] illustre schématiquement un algorithme, implémenté par l'émetteur, représentant un procédé de configuration du mode de communication de l'émetteur ; et
[Fig. 8] illustre schématiquement un algorithme de gestion dans le temps du mode de communication de l'émetteur.

### EXPOSE DETAILLE DE MODES DE REALISATION

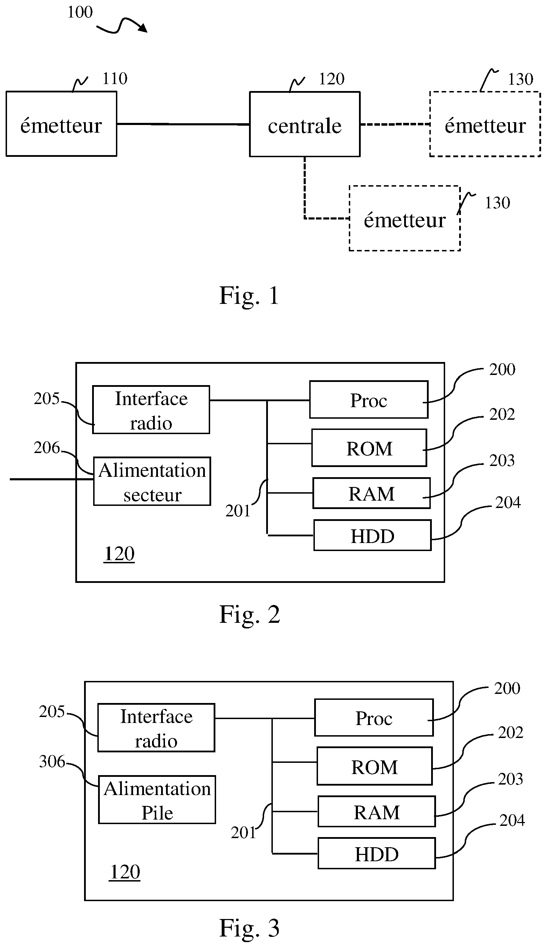

La **Fig. 1** illustre ainsi schématiquement un réseau 100 de communication radio comportant un émetteur 110 et une centrale 120. La centrale 120 peut être alimentée en énergie électrique, soit par un réseau de fourniture en énergie électrique d'un bâtiment, soit par une pile. La centrale 120 est gestionnaire du réseau 100 de communication radio. L'émetteur 110 peut échanger des messages avec la centrale 120 dans le réseau de communication radio en appliquant sélectivement un premier mode de communication ou un second mode de communication.

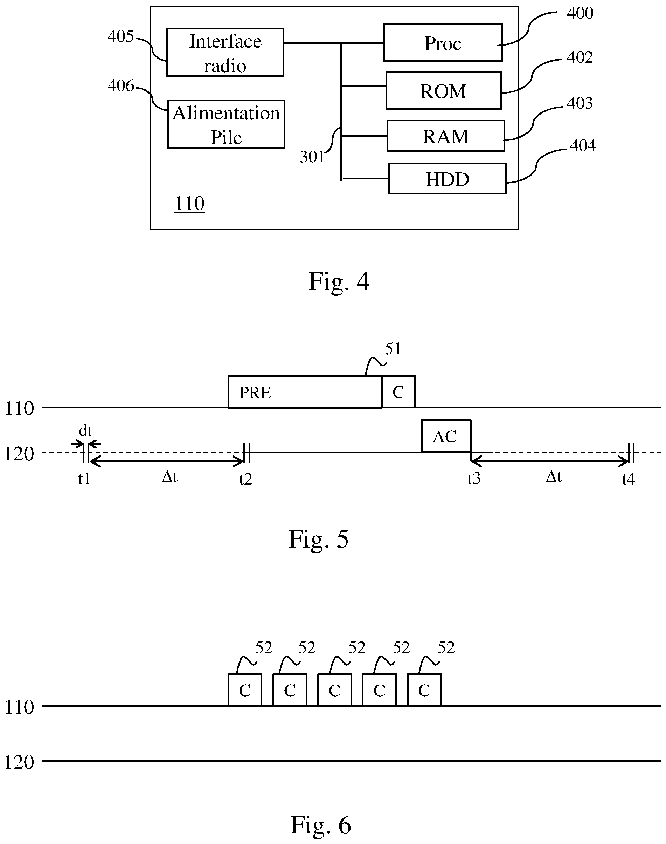

L'émetteur 110 sélectionne le premier mode de communication lorsque la centrale 120 applique le premier mode de communication. C'est par exemple le cas si la centrale 120 est alimentée en énergie électrique par une pile. Ledit premier mode de communication est décrit ci-après à la Fig. 5.

L'émetteur 110 sélectionne le second mode de communication lorsque la centrale 120 applique le second mode de communication. C'est par exemple le cas si la centrale 120 est alimentée en énergie électrique par un réseau de fourniture en énergie électrique. Ledit second mode de communication est décrit ci-après à la Fig. 6.

La centrale 120 peut en outre être reliée à d'autres émetteurs 130 par le biais du réseau 100 de communication radio.

La **Fig. 2** illustre un exemple d'architecture de la centrale 120 alimentée en énergie électrique par un réseau de fourniture en énergie électrique.

La centrale 120 alimentée en énergie électrique par le réseau de fourniture en énergie électrique comprend : un processeur, micro-processeur, ou microcontrôleur 200 ; une mémoire volatile RAM (« Random Access Memory » en anglais) 203 ; une mémoire non volatile ROM (« Read Only Memory » en anglais) 202 ; une unité de stockage ou un lecteur de support de stockage, tel qu'un disque dur HDD (« Hard Disk Drive » en anglais) 204 ; une interface radio 205 ; une alimentation 206 en énergie électrique par le réseau de fourniture en énergie électrique ; et un bus de communication 201 reliant le processeur 200 à la mémoire ROM 202, à la mémoire RAM 203, au disque dur HDD 204 et à l'interface radio 205.

Le processeur 200 est capable d'exécuter des instructions chargées dans la mémoire volatile RAM 203 à partir de la mémoire non volatile ROM 202, d'une mémoire externe (non représentée), d'un support de stockage, ou d'un réseau de communication. Lorsque la centrale 120 alimentée en énergie électrique par le réseau de fourniture en énergie électrique est mise sous tension, le processeur 200 est capable de lire de la mémoire volatile RAM 203 des instructions et de les exécuter. Ces instructions forment un programme d'ordinateur qui cause l'implémentation, par le processeur 200, de tout ou partie du procédé décrit ici en relation avec la centrale 120.

Tout ou partie du procédé décrit en relation avec la centrale peut être implémenté sous forme logicielle par exécution d'un ensemble d'instructions par une machine programmable, telle qu'un DSP (Digital Signal Processor en anglais ou Unité de Traitement de Signal Numérique en français) ou un microcontrôleur ou être implémenté sous forme matérielle par une machine ou un composant dédié, tel qu'un FPGA (Field-Programmable Gate Array en anglais ou Matrice de Portes Programmable sur le Terrain en français) ou un ASIC (Application-Specific Integrated Circuit en anglais ou Circuit Intégré Spécifique à une Application en français).

La **Fig. 3** illustre un exemple d'architecture de la centrale alimentée en énergie électrique par une pile. La centrale 120 alimentée en énergie électrique par une pile comprend : un processeur, micro-processeur, ou microcontrôleur 200 ; une mémoire volatile RAM (« Random Access Memory » en anglais) 203 ; une mémoire non volatile ROM (« Read Only Memory » en anglais) 202 ; une unité de stockage ou un lecteur de support de stockage, tel qu'un disque dur HDD (« Hard Disk Drive » en anglais) 204 ; une interface radio 205 ; une alimentation 306 en énergie électrique par une pile ; et un bus de communication 201 reliant le processeur 200 à la mémoire ROM 202, à la mémoire RAM 203, au disque dur HDD 204 et à l'interface radio 205.

Le processeur 200 est capable d'exécuter des instructions chargées dans la mémoire volatile RAM 203 à partir de la mémoire non volatile ROM 202, d'une mémoire externe (non représentée), d'un support de stockage, ou d'un réseau de communication. Lorsque la centrale 120 alimentée en énergie électrique par le réseau de fourniture en énergie électrique est mise sous tension, le processeur 200 est capable de lire de la mémoire volatile RAM 203 des instructions et de les exécuter. Ces instructions forment un programme d'ordinateur qui cause l'implémentation, par le processeur 200, de tout ou partie du procédé décrit en relation avec la centrale 120.

Tout ou partie du procédé décrit ici en relation avec la centrale 120 peut être implémenté sous forme logicielle par exécution d'un ensemble d'instructions par une machine programmable, telle qu'un DSP (Digital Signal Processor en anglais ou Unité de Traitement de Signal Numérique en français) ou un microcontrôleur ou être implémenté sous forme matérielle par une machine ou un composant dédié, tel qu'un FPGA (Field-Programmable Gate Array en anglais ou Matrice de Portes Programmable sur le Terrain en français) ou un ASIC (Application-Specific Integrated Circuit en anglais ou Circuit Intégré Spécifique à une Application en français).

La **Fig. 4** illustre un exemple d'architecture de l'émetteur 110 dans lequel la présente invention est implémentée.

L'émetteur 110 : un processeur, micro-processeur, ou microcontrôleur 400 ; une mémoire volatile RAM (« Random Access Memory » en anglais) 403 ; une mémoire non volatile ROM (« Read Only Memory » en anglais) 402 ; une unité de stockage ou un lecteur de support de stockage, tel qu'un disque dur HDD (« Hard Disk Drive » en anglais) 404 ; une interface radio 405 et un bus de communication 401 reliant le processeur 400 à la mémoire ROM 202, à la mémoire RAM 403, au disque dur HDD 404 et à l'interface radio 405.

Le processeur 400 est capable d'exécuter des instructions chargées dans la mémoire volatile RAM 403 à partir de la mémoire non volatile ROM 402, d'une mémoire externe (non représentée), d'un support de stockage, ou d'un réseau de communication. Lorsque l'émetteur 110 est mis sous tension, le processeur 400 est capable de lire de la mémoire volatile RAM 203 des instructions et de les exécuter. Ces instructions forment un programme d'ordinateur qui cause l'implémentation, par le processeur 400, de tout ou partie du procédé décrit en relation avec l'émetteur 110.

Tout ou partie du procédé décrit ici en relation avec l'émetteur 110 peut être implémenté sous forme logicielle par exécution d'un ensemble d'instructions par une machine programmable, telle qu'un DSP (Digital Signal Processor en anglais ou Unité de Traitement de Signal Numérique en français) ou un microcontrôleur ou être implémenté sous forme matérielle par une machine ou un composant dédié, tel qu'un FPGA (Field-Programmable Gate Array en anglais ou Matrice de Portes Programmable sur le Terrain en français) ou un ASIC (Application-Specific Integrated Circuit en anglais ou Circuit Intégré Spécifique à une Application en français).

L'émetteur 110 comporte en outre une alimentation 306 en énergie électrique par une pile. La **Fig. 5** illustre un chronogramme de signaux échangés dans le réseau 100 de communication radio lorsque l'émetteur 110 et la centrale 120 appliquent le premier mode de communication.

Lorsque l'émetteur 110 applique le premier mode de communication, chaque trame de données 51 émise par l'émetteur 110 est constituée d'un préambule PRE d'une première durée prédéterminée et comprenant des informations prédéterminées suivi d'un champ de données C. Les informations prédéterminées du préambule PRE comportent un motif prédéfini répété pendant toute la première durée prédéterminée. Le motif prédéfini est par exemple constitué d'un mot de 16 bits prédéfinis, tels que B4B4 ou encore 9A9A en notation hexadécimale. Le préambule PRE permet ainsi à un récepteur qui détecte le motif prédéfini, de maintenir activée son interface radio pour recevoir le champ de données C. Le champ de données C comporte un identifiant de l'émetteur 110. En outre, le champ de données C peut comporter des informations représentatives d'un changement d'état d'une variable tel que par exemple une information représentative de l'ouverture ou de la fermeture d'une porte.

Lorsque la centrale 120 applique le premier mode de communication, la centrale 120 active son interface radio 205 à intervalles régulièrement espacés d'une durée Δt au plus égale à la première durée prédéterminée, et pendant une seconde durée prédéterminée dt très inférieure à la durée Δt. La centrale 120 active ainsi son interface radio à des instants t1, t2 et t4. Si l'interface radio 205 détecte la réception d'aucun signal pendant ladite seconde durée prédéterminée dt, la centrale 120 désactive son interface radio 205. C'est par exemple le cas à l'instant t1 ou à l'instant t4.

En revanche, si l'interface radio 205 détecte la réception d'un signal, par exemple un préambule PRE d'une trame de données 51 émise par l'émetteur 110, la centrale 120 maintient son interface radio 205 activée de sorte à recevoir entièrement le champ de données C de la trame de données 51. C'est le cas par exemple à l'instant t2. Après réception de la trame de données 51, la centrale 120 émet un message d'acquittement AC à destination de l'émetteur 110 ayant émis la trame de données 51 puis désactive son interface radio 205 pour la durée Δt si aucun autre signal n'est reçu. Le message d'acquittement AC comporte un identifiant dudit émetteur 110 ayant émis la trame de données 51 ainsi qu'un identifiant de la centrale 120 qui émet ledit acquittement AC. Le message d'acquittement AC comporte en outre une information représentative du type de trame reçue, telle que par exemple une information représentative d'une trame d'association si ladite trame de données 51 reçue est une trame d'association ou selon un autre exemple une information représentative d'une trame de détection d'événement si la trame de données 51 reçue est une trame de détection d'événement.

L'émetteur 110 maintient son interface radio 405 activée après avoir émis la trame de données 51 tant qu'un acquittement AC n'est pas reçu. Lorsque l'émetteur 110 reçoit le message d'acquittement AC émis par la centrale 120, l'émetteur 110 considère alors que la trame de données 51 émise a été correctement réceptionnée. En revanche, si l'émetteur 110 ne reçoit pas de message d'acquittement AC en réponse à l'émission d'une trame de données 51, par exemple après un second délai prédéterminé, l'émetteur 110 réémet ladite trame de données 51. La trame de données 51 peut être réémise sur le même canal radio de transmission ou sur un canal radio de transmission différent.

La **Fig. 6** illustre un chronogramme de signaux échangés dans le réseau 100 de communication radio lorsque l'émetteur 110 et la centrale 120 appliquent le second mode de communication.

Lorsque la centrale 120 applique le second mode de communication, la centrale 120 active son interface radio 205 en permanence et peut donc potentiellement recevoir à chaque instant une trame de données 52 émise par l'émetteur 110.

Lorsque l'émetteur 110 applique le second mode de communication, chaque trame de données 52 émise par l'émetteur est constituée uniquement d'un champ de données C et ne comporte donc pas de préambule.

Dans le second mode de communication, la centrale 120 n'émet pas d'acquittement en réponse à la réception d'une trame de données 52.

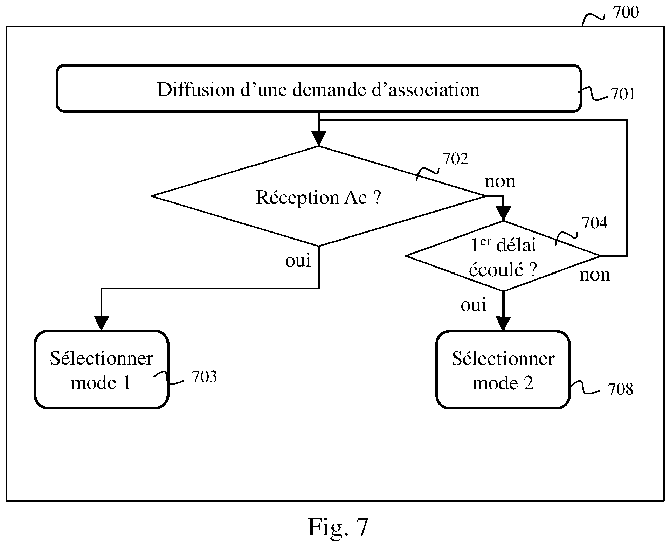

Dans un mode particulier, chaque trame de données 52 est émise successivement à plusieurs reprises, à intervalles réguliers et un nombre de fois prédéterminé. L'émission d'une trame de données 52 à plusieurs reprises par l'émetteur 110 permet ainsi de maximiser les probabilités de réception de ladite trame de données 52 par la centrale 120. La **Fig. 7** illustre un algorithme, implémenté par l'émetteur, représentant un procédé de configuration 700 du mode de communication de l'émetteur 110.

Dans une première étape 701, le mode de communication de l'émetteur 110 n'est pas prédéfini. L'émetteur 110 diffuse (« broadcast » en anglais) une demande d'association dans le réseau 100 de communication radio. Ladite demande d'association peut être émise soit de manière automatique, soit suite à l'exécution d'une commande manuelle, telle qu'un appui sur un bouton dédié, par un utilisateur de l'émetteur 110. C'est par exemple le cas lors d'une première installation de l'émetteur 110 dans le réseau 100 de communication radio.

La demande d'association comporte un identifiant de l'émetteur 110. Si la demande d'association est reçue par une centrale 120 du réseau 100 de communication radio configurée pour ajouter un émetteur, la centrale 120 enregistre alors un identifiant de l'émetteur 110 afin de pouvoir communiquer avec l'émetteur 110. La demande d'association permet ainsi à l'émetteur de communiquer son identifiant à la centrale 120 afin d'être reconnu dans le réseau 100 de communication radio et de pouvoir communiquer.

La demande d'association peut comporter une ou plusieurs trames de données. Selon un mode de réalisation particulier, la demande d'association est diffusée à plusieurs reprises, par exemple à trois reprises. Chaque trame de données de la demande d'association est alors émise à chaque diffusion de la demande d'association.

En outre, l'émetteur 110 diffuse ladite demande d'association selon le premier mode de communication. Autrement dit, chaque trame de données 51 de la demande d'association est constituée d'un préambule PRE suivi d'un champ de données C.

Dans une étape 702 suivante, l'émetteur détermine si un message d'acquittement AC est reçu en provenance d'une centrale 120 en réponse à la demande d'association et pour chaque trame de données 51 de la demande d'association diffusée. C'est le cas si ladite centrale 120 applique le premier mode de communication. Si c'est le cas, une étape 703 est effectuée. Sinon, une étape 704 est effectuée.

A l'étape 703, l'émetteur 110 sélectionne le premier mode de communication. Autrement dit, l'émetteur définit que le premier mode de communication est à appliquer pour effectuer tout échange de données avec la centrale 120 dans le réseau 100 de communication radio. Ainsi, l'émetteur 110 détecte automatiquement que la centrale 120 applique le premier mode de communication et sélectionne alors ledit premier mode de communication.

A l'étape 704, l'émetteur 110 détermine si un premier délai prédéterminé est écoulé depuis la diffusion de la demande d'association à l'étape 701. Si c'est le cas, une étape 708 est effectuée. Sinon, l'étape 702 est réitérée. Le premier délai prédéterminé est par exemple de 24h.

A l'étape 708, l'émetteur 110 n'a pas reçu d'acquittement en réponse à la demande d'association diffusée et le premier délai est écoulé, l'émetteur 110 sélectionne alors le second mode de communication. Autrement dit, l'émetteur définit que le second mode de communication est à appliquer pour l'échange de données avec la centrale 120 dans le réseau 100 de communication radio. Ainsi, l'émetteur 110 sélectionne automatiquement le mode de communication appliqué par la centrale 120 à laquelle l'émetteur 110 s'associe. Selon un mode de réalisation particulier, tant que le premier délai prédéterminé n'est pas écoulé, l'émetteur 110 diffuse une demande d'association additionnelle, soit de manière automatique avec par exemple une périodicité de 1h30, soit suite à l'exécution d'une commande manuelle, telle qu'un appui sur un bouton dédié, par un utilisateur de l'émetteur 110. Le premier délai prédéterminé est défini à compter de la diffusion de la première demande d'association.

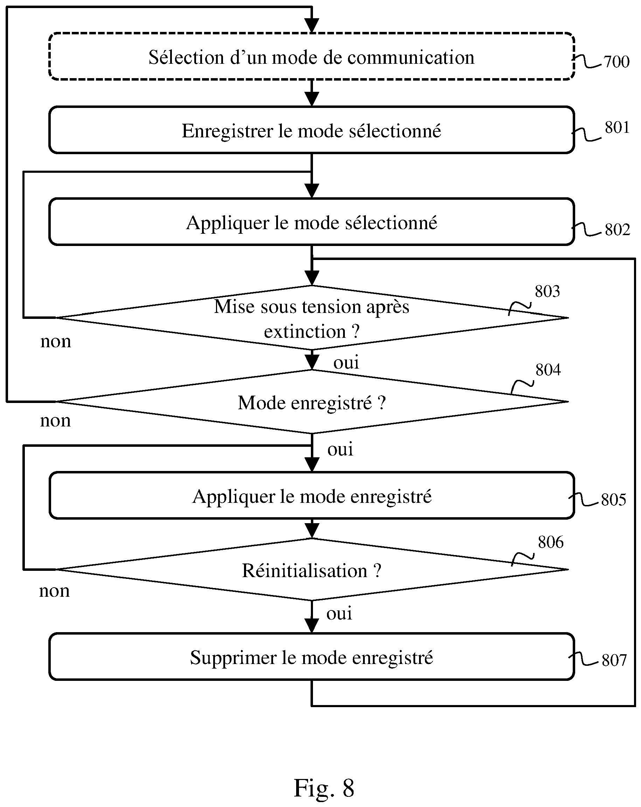

La **Fig. 8** illustre un algorithme de gestion dans le temps du mode de communication de l'émetteur.

A la première étape 700, l'émetteur 110 effectue le procédé de configuration 700 du mode de communication décrit à la Fig. 7 et sélectionne ainsi soit le premier mode de communication soit le second mode de communication.

Dans une étape 801 suivante, l'émetteur 110 enregistre une information représentative du mode de communication sélectionné précédemment à l'étape 700.

Dans une étape 802 suivante, l'émetteur 110 applique le mode de communication sélectionné pour effectuer des échanges dans le réseau 100 de communication radio avec la centrale 120.

Dans une étape 803 suivante, l'émetteur 110 détermine si une mise sous tension de l'émetteur 110 est effectuée après extinction dudit émetteur 110. Si c'est le cas, une étape 804 est effectuée. Sinon, l'étape 802 est réitérée.

A l'étape 804, l'émetteur 110 détermine si une information représentative d'un mode de communication est enregistrée. Si c'est le cas, l'émetteur 110 effectue l'étape 805. Sinon, l'émetteur 110 doit sélectionner un mode de communication et réitère pour cela l'étape 700.

A l'étape 805, l'émetteur 110 applique le mode de communication identifié par l'information représentative dudit mode de communication enregistrée afin de communiquer avec la centrale 120 dans le réseau 100 de communication radio. Ainsi, l'émetteur 110 ne nécessite pas d'effectuer le procédé de configuration 700 du mode de communication à chaque extinction et mise sous tension et peut communiquer directement avec la centrale 120 lorsqu'un mode de communication est identifié par une information enregistrée.

Dans une étape 806 suivante, l'émetteur 110 détermine si une demande de réinitialisation est reçue. Une demande de réinitialisation peut être effectuée par un utilisateur par un appui sur un bouton de l'émetteur pendant une durée de 30s par exemple. Une telle demande de réinitialisation peut être effectuée pour utiliser un émetteur dans un nouveau contexte tel qu'un nouveau réseau 100 de communication radio. Si une demande de réinitialisation est reçue, une étape 807 est effectuée. Sinon, l'étape 805 est réitérée.

A l'étape 807, l'émetteur 110 supprime l'information représentative du mode de communication enregistrée à l'étape 802. L'émetteur 110 réitère ensuite l'étape 803. Ainsi, il est aisé de déplacer l'émetteur 110 depuis un réseau 100 de communication radio comportant une centrale 120 appliquant un mode de communication vers un autre réseau 100 de communication radio comportant une centrale 120 appliquant un autre mode de communication.

## Revendications

1. Procédé de configuration d'un mode de communication d'un émetteur (110) dans un réseau (100) de communication radio, le réseau (100) de communication radio comportant une centrale (120), l'émetteur (110) pouvant appliquer sélectivement un premier mode de communication ou un second mode de communication, le procédé comportant des étapes de :
- Diffuser (701) une demande d'association dans le réseau (100) de communication selon le premier mode de communication,
Sélectionner (703) le premier mode de communication lorsqu'un message d'acquittement est reçu en provenance de la centrale (120) en réponse à la demande d'association,
- Sélectionner (708) le second mode de communication si aucun message d'acquittement n'est reçu en réponse à la demande d'association lorsqu'un délai prédéterminé est écoulé (704) depuis la diffusion de ladite demande d'association,
- Appliquer (802) le mode de communication sélectionné pour communiquer dans le réseau de communication, **caractérisé en ce que** chaque trame (51) de données émise par l'émetteur (110) est constituée d'un préambule (PRE) d'une durée prédéterminée suivi d'un champ de données (C) lorsque l'émetteur applique le premier mode de communication et chaque trame (52) de données émise par l'émetteur (110) est constituée uniquement d'un champ de données (C) lorsque l'émetteur applique le second mode de communication.

2. Procédé selon la revendication 1, **caractérisé en ce qu'**il comporte :
- Enregistrer (801) une information représentative du mode de communication sélectionné,
- Appliquer (805) le mode de communication identifié par ladite information représentative enregistrée lorsque l'émetteur est remis sous tension après extinction.

3. Procédé selon la revendication 2, **caractérisé en ce qu'**il comporte en outre :
- Supprimer (807) le mode de communication enregistré lorsqu'une demande de réinitialisation est reçue.

4. Emetteur (110) dans un réseau (100) de communication radio, le réseau (100) de communication radio comportant une centrale (120), l'émetteur (110) pouvant appliquer sélectivement un premier mode de communication ou un second mode de communication, l'émetteur comportant :
- Des moyens pour diffuser (701) une demande d'association dans le réseau de communication selon le premier mode de communication,
Des moyens pour sélectionner (703) le premier mode de communication lorsqu'un message d'acquittement est reçu en provenance de la centrale,
- Des moyens pour sélectionner (708) le second mode de communication si aucun message d'acquittement n'est reçu lorsqu'un délai prédéterminé est écoulé depuis la diffusion de ladite demande d'association,
- Des moyens pour appliquer (802) le mode de communication sélectionné pour communiquer dans le réseau de communication, **caractérisé en ce que** chaque trame (51) de données émise par l'émetteur (110) est constituée d'un préambule (PRE) d'une durée prédéterminée suivi d'un champ de données (C) lorsque l'émetteur applique le premier mode de communication et chaque trame (52) de données émise par l'émetteur (110) est constituée uniquement d'un champ de données (C) lorsque l'émetteur applique le second mode de communication.

5. Système **caractérisé en ce qu'**il comporte l'émetteur (110) selon la revendication précédente et comportant en outre la centrale (120) du réseau de communication radio.

6. Système selon la revendication précédente **caractérisé en ce que** la centrale (120) émet un message d'acquittement (AC) à destination de l'émetteur (110) lorsque la centrale (120) reçoit une trame (51) de données dudit émetteur (110) et si la centrale applique le premier mode de communication et **en ce que** la centrale (110) n'émet aucun message d'acquittement si la centrale (120) applique le second mode de communication.

7. Programme d'ordinateur pouvant être stocké sur un support et/ou téléchargé d'un réseau de communication, **caractérisé en ce qu'**il comprend des instructions pour implémenter, par un processeur d'un émetteur, le procédé selon l'une quelconque des revendications 1 à 3, lorsque ledit programme est exécuté par ledit processeur de l'émetteur.

8. Support de stockage d'informations **caractérisé en ce qu'**il stocke un programme d'ordinateur comprenant des instructions pour implémenter, par un processeur d'un émetteur, le procédé selon l'une quelconque des revendications 1 à 3, lorsque ledit programme est exécuté par ledit processeur.

## Patentansprüche

1. Verfahren zur Konfiguration eines Senders (110) in einem Funkkommunikationsnetz (100), wobei das Funkkommunikationsnetz (100) eine Zentrale (120) aufweist, wobei der Sender (110) selektiv einen ersten Kommunikationsmodus oder einen zweiten Kommunikationsmodus anwenden kann, wobei das Verfahren die Schritte aufweist:
- Verbreiten (701) einer Verbindungsanforderung im Kommunikationsnetz (100) gemäß dem ersten Kommunikationsmodus,
- Auswahl (703) des ersten Kommunikationsmodus, wenn als Antwort auf die Verbindungsanforderung eine Bestätigungsnachricht von der Zentrale (120) empfangen wird,
- Auswahl (708) des zweiten Kommunikationsmodus, falls keine Bestätigungsnachricht als Antwort auf die Verbindungsanforderung empfangen wird, wenn seit der Verbreitung der Verbindungsanforderung eine vorbestimmte Frist abgelaufen ist (704),
- Anwenden (802) des ausgewählten Kommunikationsmodus, um im Kommunikationsnetz zu kommunizieren,
**dadurch gekennzeichnet, dass** jeder vom Sender (110) gesendete Datenrahmen (51) aus einer Präambel (PRE) einer vorbestimmten Dauer gefolgt von einem Datenfeld (C) besteht, wenn der Sender den ersten Kommunikationsmodus anwendet, und jeder vom Sender (110) gesendete Datenrahmen (52) nur aus einem Datenfeld besteht (C), wenn der Sender den zweiten Kommunikationsmodus anwendet.

2. Verfahren nach Anspruch 1, **dadurch gekennzeichnet, dass** es aufweist:
- Speichern (801) einer für den ausgewählten Kommunikationsmodus repräsentativen Information,
- Anwenden (805) des von der gespeicherten repräsentativen Information identifizierten Kommunikationsmodus, wenn der Sender nach dem Abschalten wieder eingeschaltet wird.

3. Verfahren nach Anspruch 2, **dadurch gekennzeichnet, dass** es außerdem aufweist:
- Löschen (807) des gespeicherten Kommunikationsmodus, wenn eine Rücksetzanforderung empfangen wird.

4. Sender (110) in einem Funkkommunikationsnetz (100), wobei das Funkkommunikationsnetz (100) eine Zentrale (120) aufweist, wobei der Sender (110) selektiv einen ersten Kommunikationsmodus oder einen zweiten Kommunikationsmodus anwenden kann, wobei der Sender aufweist:
- Einrichtungen zur Verbreitung (701) einer Verbindungsanforderung im Kommunikationsnetz gemäß dem ersten Kommunikationsmodus,
- Einrichtungen zur Auswahl (703) des ersten Kommunikationsmodus, wenn eine Bestätigungsnachricht von der Zentrale empfangen wird,
- Einrichtungen zur Auswahl (708) des zweiten Kommunikationsmodus, falls keine Bestätigungsnachricht empfangen wird, wenn seit der Verbreitung der Verbindungsanforderung eine vorbestimmte Frist abgelaufen ist,
- Einrichtungen zur Anwendung (802) des ausgewählten Kommunikationsmodus, um im Kommunikationsnetz zu kommunizieren,
**dadurch gekennzeichnet, dass** jeder vom Sender (110) gesendete Datenrahmen (51) aus einer Präambel (PRE) einer vorbestimmten Dauer gefolgt von einem Datenfeld (C) besteht, wenn der Sender den ersten Kommunikationsmodus anwendet, und jeder vom Sender (110) gesendete Datenrahmen (52) nur aus einem Datenfeld (C) besteht, wenn der Sender den zweiten Kommunikationsmodus anwendet.

5. System, **dadurch gekennzeichnet, dass** es den Sender (110) nach dem vorhergehenden Anspruch aufweist und außerdem die Zentrale (120) des Funkkommunikationsnetzes aufweist.

6. System nach dem vorhergehenden Anspruch, **dadurch gekennzeichnet, dass** die Zentrale (120) eine Bestätigungsnachricht (AC) an den Sender (110) sendet, wenn die Zentrale (120) einen Datenrahmen (51) vom Sender empfängt (110) und falls die Zentrale den ersten Kommunikationsmodus anwendet, und dass die Zentrale (110) keine Bestätigungsnachricht sendet, falls die Zentrale (120) den zweiten Kommunikationsmodus anwendet.

7. Computerprogramm, das auf einem Träger gespeichert und/oder von einem Kommunikationsnetz heruntergeladen werden kann, **dadurch gekennzeichnet, dass** es Anweisungen enthält, um durch einen Prozessor eines Senders das Verfahren nach einem der Ansprüche 1 bis 3 zu implementieren, wenn das Programm vom Prozessor des Senders ausgeführt wird.

8. Informationsspeicherträger, **dadurch gekennzeichnet, dass** er ein Computerprogramm speichert, das Anweisungen enthält, um durch einen Prozessor eines Senders das Verfahren nach einem der Ansprüche 1 bis 3 zu implementieren, wenn das Programm vom Prozessor ausgeführt wird.

## Claims

1. Method for configuring a communication mode of a transmitter (110) in a radio communication network (100), the radio communication network (100) comprising a hub (120), the transmitter (110) being able to selectively apply a first communication mode or a second communication mode, the method comprising steps of:
- broadcasting (701) an association request in the communication network (100) according to the first communication mode,
- selecting (703) the first communication mode when an acknowledgement message is received from the hub (120) in response to the association request,
- selecting (708) the second communication mode if no acknowledgement message has been received in response to the association request when a predetermined time has elapsed (704) since said association request was broadcast,
- applying (802) the selected communication mode in order to communicate in the communication network, **characterized in that** each data frame (51) transmitted by the transmitter (110) is composed of a preamble (PRE) of a predetermined duration followed by a data field (C) when the transmitter applies the first communication mode and each data frame (52) transmitted by the transmitter (110) is composed only of a data field (C) when the transmitter applies the second communication mode.

2. Method according to Claim 1, **characterized in that** it comprises:
- recording (801) information which is representative of the selected communication mode,
- applying (805) the communication mode identified by said recorded representative information when the transmitter is turned back on after being turned off.

3. Method according to Claim 2, **characterized in that** it further comprises:
- removing (807) the recorded communication mode when a reset request is received.

4. Transmitter (110) in a radio communication network (100), the radio communication network (100) comprising a hub (120), the transmitter (110) being able to selectively apply a first communication mode or a second communication mode, the transmitter comprising:
- means for broadcasting (701) an association request in the communication network according to the first communication mode,
- means for selecting (703) the first communication mode when an acknowledgement message is received from the hub,
- means for selecting (708) the second communication mode if no acknowledgement message has been received when a predetermined time has elapsed since said association request was broadcast,
- means for applying (802) the selected communication mode in order to communicate in the communication network, **characterized in that** each data frame (51) transmitted by the transmitter (110) is composed of a preamble (PRE) of a predetermined duration followed by a data field (C) when the transmitter applies the first communication mode and each data frame (52) transmitted by the transmitter (110) is composed only of a data field (C) when the transmitter applies the second communication mode.

5. System **characterized in that** it comprises the transmitter (110) according to the preceding claim and further comprising the hub (120) of the radio communication network.

6. System according to the preceding claim, **characterized in that** the hub (120) transmits an acknowledgement message (AC) to the transmitter (110) when the hub (120) receives a data frame (51) from said transmitter (110) and if the hub applies the first communication mode, and **in that** the hub (110) transmits no acknowledgement message if the hub (120) applies the second communication mode.

7. Computer program which may be stored on a medium and/or downloaded from a communication network, **characterized in that** it comprises instructions for a processor of a transmitter to implement the method according to any one of Claims 1 to 3, when said program is executed by said processor of the transmitter.

8. Information storage medium **characterized in that** it stores a computer program comprising instructions for a processor of a transmitter to implement the method according to any one of Claims 1 to 3, when said program is executed by said processor.
